# EUROPEAN PATENT SPECIFICATION

(11) **EP 1 461 809 B1**
(45) Date of publication and mention of the grant of the patent: **22.04.2009**
(21) Application number: 02793295.3
(22) Date of filing: 06.12.2002
(51) Int. Cl.: G11B 20/00

(54) **A COPY-PROTECTED COMPACT DISC AND METHOD FOR PRODUCING SAME**
KOPIERGESCHÜTZTE KOMPAKTDISK UND VERFAHREN ZU IHRER HERSTELLUNG
DISQUE COMPACT PROTEGE CONTRE LA COPIE ET PROCEDE DE FABRICATION CORRESPONDANT

(30) Priority: 03.01.2002 US 344040 P; 28.01.2002 US 351416 P
(43) Date of publication of application: 29.09.2004
(73) Proprietor: Macrovision Europe Limited, Maidenhead, Berkshire SL6 1BR (GB)
(72) Inventor: HAHN, Yehuda, 90627 Ofra (IL)
(74) Representative: Rupprecht, Kay
(86) International application number: PCT/IL2002/000989
(87) International publication number: WO 2003/049107

(56) References cited:
- WO-A-00/74053
- WO-A-01/61695
- WO-A-01/78074
- WO-A-01/80546
- WO-A-02/075735
- WO-A-03/034424
- US-A- 5 065 388
- "Data interchange on read-only 120 mm optical data disks (CD-ROM), second edition" STANDARD ECMA, XX, XX, no. ECMA-130, June 1996 (1996-06), XP002143627
- ECMA: "Volume and File Structure of Read-Only and Write-Once Compact Disk Media for Information Interchange" STANDARD ECMA-168, XX, XX, December 1994 (1994-12), pages 1-128, XP002183920

## Description

### FIELD OF THE INVENTION

The present invention relates to copy protection, and, more particularly, to a method and system for the copy protection of audio compact discs (CDs).

### BACKGROUND OF THE INVENTION

Both computer software and digital audio recordings are commonly recorded on to compact discs (CDs). Computers, such as personal computers (PCs) read audio CDs differently than do consumer CD playback systems, such as car players, boom boxes, portable devices and hi-fi players, for example).

CDs are almost universally made in accordance with the following international standards:
- International Standards Organization (ISO) 9660: Information Processing-Volume and File Structure of CD-ROM for Information Interchange, ISO Standard 13490-1
- International Electrotechnique Commission (CEI-IEC) 908 (generally conforming to what is known as the "Red Book")
- ISO/IEC 10140 (generally conforming to what is known as the "Yellow Book")

Because the data recorded on compact disc is in a digital format with an error-correction capability, it is possible to make faithful copies whose playback is indistinguishable from that of the original disc from which the copy was made. Furthermore, equipment for producing compact discs is readily-available and relatively inexpensive, both for stamped discs and for recorded discs. As a result, the unauthorized or illegal copying of compact discs has thus become a serious problem.

Consumers who have purchased inexpensive computer systems and CD recorders are capable of making copies of original CDs, thereby depriving the copyright owner of a sale.

Only suitable copy-protection methods can succeed in reducing the increasing flood of these unauthorized recorded disc copies. Unfortunately existing prior art copy-protection methods are unsuitable and/or inadequately effective for the audio compact disc.

### SUMMARY OF THE INVENTION

The present application relates to a copy-protected compact disc and a method for producing the optical disc and preventing unauthorized copying. The system and method of copy protection also protects CD-R discs and prevents their being extracted on to a personal computer (PC).

Aspects of the present invention are defined on the appended claims.

### BRIEF DESCRIPTION OF THE DRAWINGS

The invention is herein described, by way of example only, with reference to the accompanying drawings, wherein:
Figs. 1a-1e are a schematic prior art representation of the structure of a compact disc (CD);
Fig. 2 is a schematic prior art representation of portions of two consecutive uniform TOCs in a given session of the CD of Fig. 1;
Fig. 3 is a prior art schematic representation of standard track pointers of the CD of Fig. 1;
Fig. 4 is a schematic prior art representation of multi-session pointers of the CD of Fig. 1;
Fig. 5 is a schematic prior art representation of a uniform TOC containing uniform triplets of the CD of Fig. 1;
Fig. 6 is a schematic illustration of a system for the copy protection of audio compact discs (CDs), according to an embodiment of the present invention;
Fig. 7 is a schematic illustration of a system for the copy protection of audio compact discs (CDs), according to a further embodiment of the present invention;
Fig. 8 is a schematic illustration of a system for the copy protection of audio compact discs (CDs), according to a further embodiment of the present invention;
Fig. 9 is a schematic illustration of a system for the copy protection of audio compact discs (CDs), according to a further embodiment of the present invention;
Fig. 10 is a schematic illustration of a system for the copy protection of audio compact discs (CDs),according to a further embodiment of the present invention;
Fig. 11 is a schematic illustration of a system for the copy protection of audio compact discs (CDs), according to a further embodiment of the present invention;
Fig. 12 is a schematic illustration of a system for the copy protection of audio compact discs (CDs), according to a further embodiment of the present invention;
Fig. 13 is a schematic illustration of a system for the copy protection of audio compact discs (CDs) according to an embodiment of the present invention;
Fig. 14 is a schematic illustration of a system for the copy protection of audio compact discs (CDs) according to a further embodiment of the present invention;
Fig. 15 is a schematic illustration of a system for the copy protection of audio compact discs (CDs) according to a further embodiment of the present invention;
Fig. 16 is a schematic illustration of a system for the copy protection of audio compact discs (CDs).according to a further embodiment of the present invention;
Fig. 17 is a schematic illustration of a system for the copy protection of audio compact discs (CDs). according to an embodiment of the present invention;
Fig. 18 is a schematic illustration of a system for the copy protection of audio compact discs (CDs).according to a further embodiment of the present invention;
Fig. 19 is a schematic illustration of a system for the copy protection of audio compact discs (CDs).according to a further embodiment of the present invention;
Fig. 20 is a schematic illustration of a system for the copy protection of audio compact discs (CDs).according to a further embodiment of the present invention;
Fig. 21 is a flow-chart illustration of a method of generating a Polymorphic TOC disc, according to an embodiment of the present invention;
Fig. 22 is a flow-chart illustration of a technique for creating a true lead-in, according to an embodiment of the present invention; and
Fig. 23 is a flow-chart illustration of a further technique for creating a true lead-in, according to a further embodiment of the present invention.

### GLOSSARY

The following glossary of terms and acronyms are used in the present patent application.

| **Term** | Description |
|---|---|
| *CD* | Compact Disc including premastered, CD-R, and CD-RW discs. |
| *Channel Q* | Bits d₂ of a subcoding block, arrayed as a single 12-byte structure, delimited by S0 and S1 subcoding sync patterns. |
| *CRC* | Cyclic Redundancy Check. Field in channel Q that checks validity of channel Q data. |
| *Identical Items* | Items that have the same values in the fields: CTRL, ADR, POINT, PMIN, PSEC, and PFRAME. |
| *Identical Triplets* | Two triplets that have the same values in the fields: CTRL, ADR, POINT, PMIN, PSEC, and PFRAME. |
| *Identical TOCs* | Two TOCs in which each triplet in the first TOC is identical to a corresponding triplet in the second TOC. |
| *Invalid Item* | An item that cannot be interpreted correctly under the rules of IEC 908. For example, an item that has an ADR value that is not 1, 2, or 5, or an item that has an invalid CRC. |
| *Item* | Channel Q of a subcoding block in the lead-in. |
| *Lead-in* | Track 0 of a session, contains TOCs in channel Q. |
| *Lead-out* | Control portion of a session that follows a session's tracks. |
| *Misleading Item* | An item that can be interpreted correctly, but does not match the track number, index, or control values in channel Q in the Program Area frame pointed to in its ATIME fields. |
| *Polymorphic* | Not uniform. A polymorphic triplet contains at least one invalid or misleading item. A polymorphic lead-in is defined as a lead-in having a at least two non-identical TOCs or at least one triplet in one TOC that is not uniform |
| *PTIME* | Point Time. Absolute starting time of POINT. In an item, PTIME is encoded in the fields PMIN to PFRAME as defined in Table 1. |
| *Session* | Section of a CD containing either audio or data tracks, or a combination of the two. A standard session contains a lead-in, at least one track, and a lead-out. |
| *TOC (Table of Contents)* | The minimum number of items required to form a complete description of a session, including track pointers, A0, A1, and A2 entries as_well as any multi-session pointers that are encapsulated within the items. TOCs are repeated to end of a session's lead-in. |
| *Track* | Single content unit (program item) on a CD. |
| *Triplet* | Three consecutive lead-in items following a POINT boundary. |
| *Uniform Lead-in* | Lead-in composed only of identical TOCs. |
| *Uniform TOC* | TOC composed only of identical triplets, |
| *Uniform Triplet* | Triplet composed of three identical items. |

### DESCRIPTION OF EMBODIMENTS

The present application relates to a copy-protected compact disc and a method for producing the disc and preventing unauthorized copying. The present invention provides an improved method that changes the contents of any lead-in item in any optical disc so that it is no longer uniform, as described in embodiments of the present invention, hereinbelow, so that the copied disc becomes effectively corrupted and unplayable.

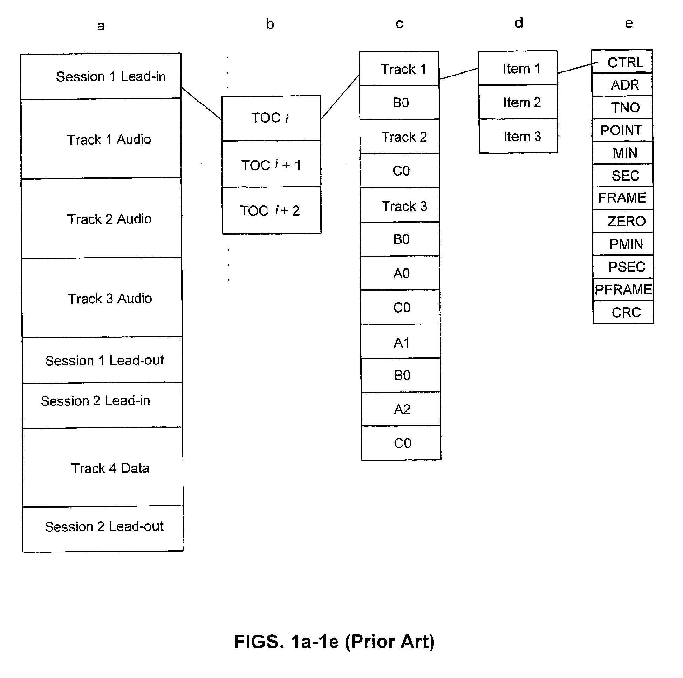

Reference is now made to Figs. 1a-1e which schematically represent the structure of a compact disc (CD) having uniform lead-ins. The exemplary disc is shown, for purposes of clarity and simplicity only, as having two sessions: Session 1 with three audio tracks (tracks 1-3), followed by Session 2 containing a single data track (track 4).

Fig. 1b illustrates the structure of the lead-in for session 1, showing that the lead-in is composed of uniform Table of Contents (TOCs) consisting of A0,A1, A2 and track pointers, that are repeated throughout the length of the lead-in. The TOC for session 2 (not shown) is similar to session 1 but contains only a single data track.

Fig. 1c shows the triplets in each TOC, with the multi-session pointers (B0 and CO). Fig. 1d shows that each triplet is composed of three items. In a uniform lead-in, each item in a triplet is identical. Fig. 1e shows the fields in a lead-in item.

The inventors have realized that it is possible to protect CDs from unauthorized copying by making changes to the session lead-in. One novelty of the copy protection method is that disc produced by the copy protection method applies these techniques to CD-R discs, thereby protecting them and preventing them from being extracted on a PC. Due to the raw write modes available in current home CD-R writing hardware and software, no special modifications are needed to implement the lead-in copy protection on CD-R and CD-RW discs.

Each session in a CD has a lead-in, which contains repetitions of the Table of Contents (TOC).

If a session's lead-in contains invalid data, a PC may not be able to read it properly. However, consumer CD playback systems (such as car players, boom boxes, portable devices, and hi-fi players) can ignore certain types of invalid lead-in data. For example, certain alterations to the lead-in of a disc's audio session make it difficult for a PC CD-ROM drive to correctly interpret the session, and hence, the disc, but these alterations do not affect the ability of consumer playback systems to play the disc.

In addition, certain CD reading devices read different offsets of the lead-in to determine the TOC, allowing specific instances of the TOC to target specific players.

In the present application the term "polymorphic" is defined as non-uniform. A polymorphic triplet is defined as a triplet, which contains at least one invalid or misleading item. A polymorphic lead-in is defined as a lead-in having a at least two non-identical TOCs or at least one triplet in one TOC that is not uniform.

### Channel Q

According to IEC 908, a subcoding block consists of the subcoding symbols in 98 consecutive EFM frames, delimited by the S0 and S1 sync patterns. Channel Q is the second most significant bit in each subcoding symbol following the sync pattern. In the program area of a disc, channel Q generally contains timing information, such as absolute disc time or track time. In the lead-in, however, channel Q contains information about the layout of the disc.

Table 1 describes a single item (ITEM) in channel Q, using the fields defined for the lead-in. For convenience, field names are used to refer to the bit position, even though the names are only valid for ADR = 1 or ADR = 5.

**Table 1: Single ITEM in lead-in channel Q (Mode 1)**

| **Field** | **Length** |
|---|---|
| CTRL (Control) | 4 bits |
| ADR (Mode) | 4 bits |
| TNO (Track Number) | 8 bits |
| POINT | 8 bits |
| MIN | 8 bits |
| SEC | 8 bits |
| FRAME | 8 bits |
| ZERO | 8 bits |
| PMIN | 8 bits |
| PSEC | 8 bits |
| PFRAME | 8 bits |
| CRC | 16 bits |

### Uniform TOCs

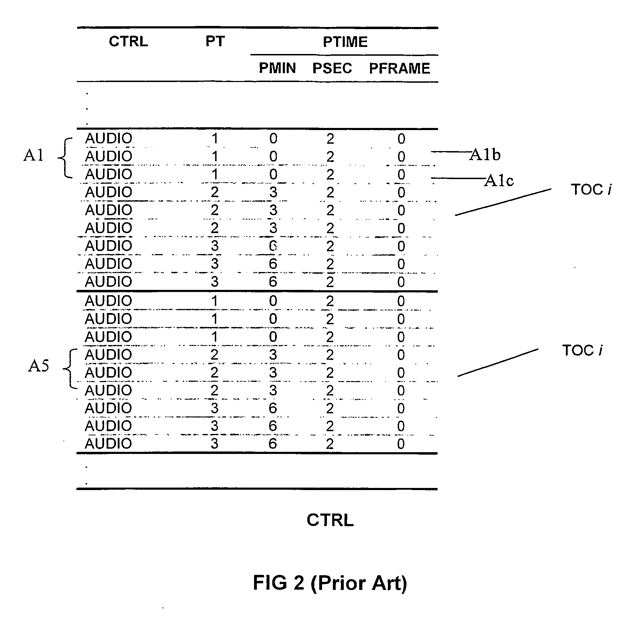

Fig. 2 is a schematic representation of portions of two consecutive uniform TOCs in a given session, showing selected fields. In this figure, and those based on it, "AUDIO" and "DATA" are used instead of their corresponding values of 00XXb and 01XXb. For clarity this partial table omits the A0-A2 pointers and multi-session pointers.

### A0-A2 Items

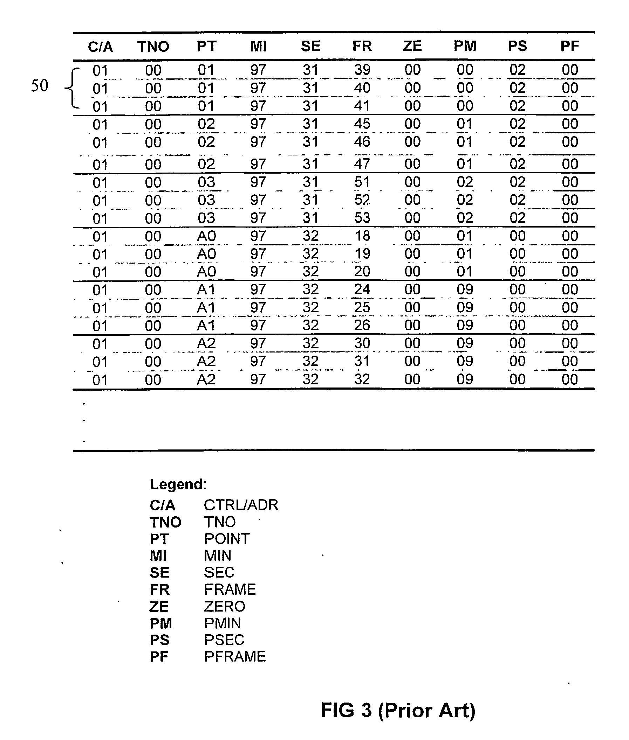

In addition to the track pointers, lead-ins contain A0-A2 items, which state the number of the first track in a disc (A0), the number of the last track (A1) and the starting time of the current session's lead-out (A2). These items follow the standard track pointers as shown in Fig. 3.

### Multi-session Discs

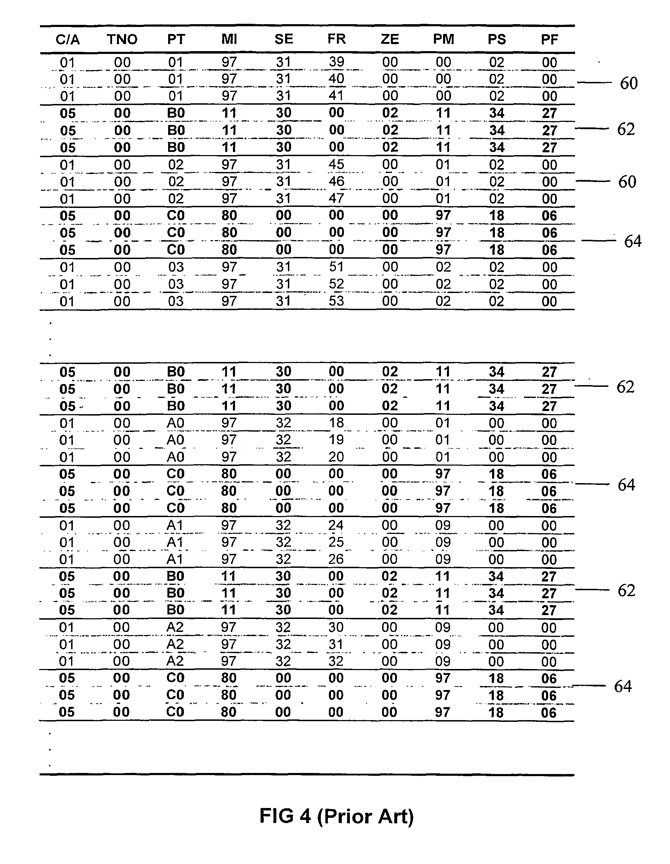

In addition to the track pointers and A0-A2 pointers, a multi-session disc has a further set of pointers that allow navigation between sessions in a linked list. These pointers are called the multi-session pointers. They are interleaved between the standard track pointers, referenced 60, as shown in Fig. 4 with the multi-session pointers bolded, referenced 62 and 64.

### Lead-ins

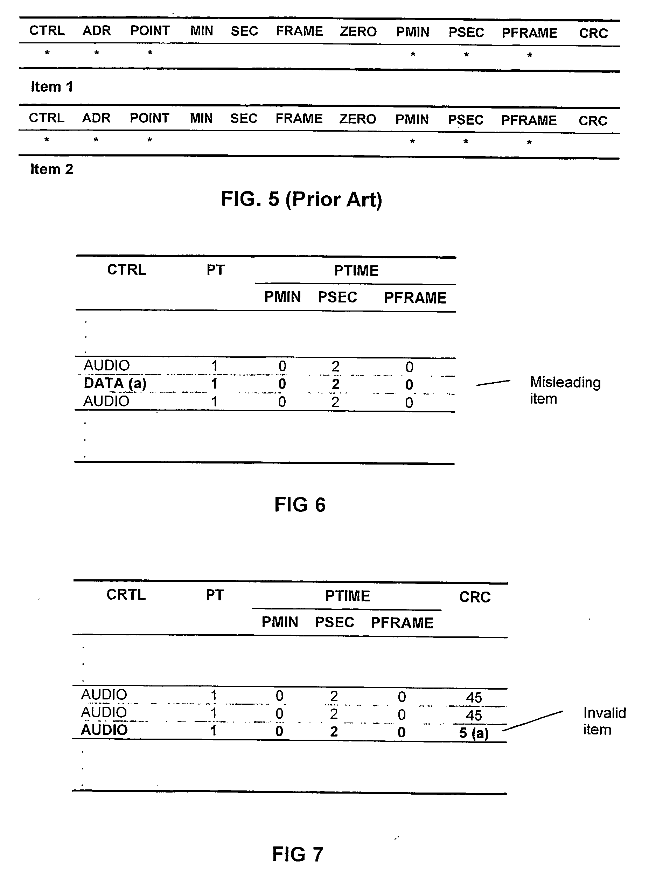

A uniform lead-in is composed of Table of Contents (TOCs), with a TOC being the minimum number of items needed to fully describe a session. A uniform TOC contains uniform triplets. A triplet is composed of three identical contiguous items that follow a POINT boundary. Two items are said to be identical if the values of the corresponding fields indicated by an * are identical (see Fig. 5). A triplet is said to be uniform if all three of its items are identical.

In the present invention, a lead-in is altered so that it contains valid, misleading, and/or invalid items arranged in a polymorphic manner, meaning that at least two of the lead-in's TOCs are not identical or at least one triplet in one of the lead-in's TOCs is not uniform.

As described below, these properties make it possible to alter the lead-in so as to render the disc useless to PCs without rendering the disc unreadable to a home or auto system.

One method of changing a lead-in is to alter items so that not all items in a triplet are uniform.

Reference is now made to Fig. 6, which illustrates a system for the copy protection of audio compact discs (CDs). according to an embodiment of the present invention. Fig. 6 illustrates the alteration of a portion of the lead-in so that the triplet is not uniform.

In the example of Fig. 6, the second of three identical AUDIO items (marked as A1b in Fig. 2) has been altered so as to indicate DATA instead of AUDIO (the triplet item is bolded and the alteration is marked by the letter "a"). In a further embodiment of the present invention, illustrated in Fig. 7, the third of three identical AUDIO items (marked as A1c in Fig. 2) has been altered to show an invalid CRC item of 5 (instead of 45).

In a further embodiment of the present invention, polymorphic TOCs are created while preserving uniform triplets. It will be appreciated by persons knowledgeable in the art that there are many possible methods of creating non-uniform (polymorphic) TOCs. Non-limiting examples of copy protection using polymorphic TOCs include comparing a track number with an iteration number and amending the item accordingly, or comparing the PTIME fields with known boundary values and amending the item according to physical location within the lead-in.

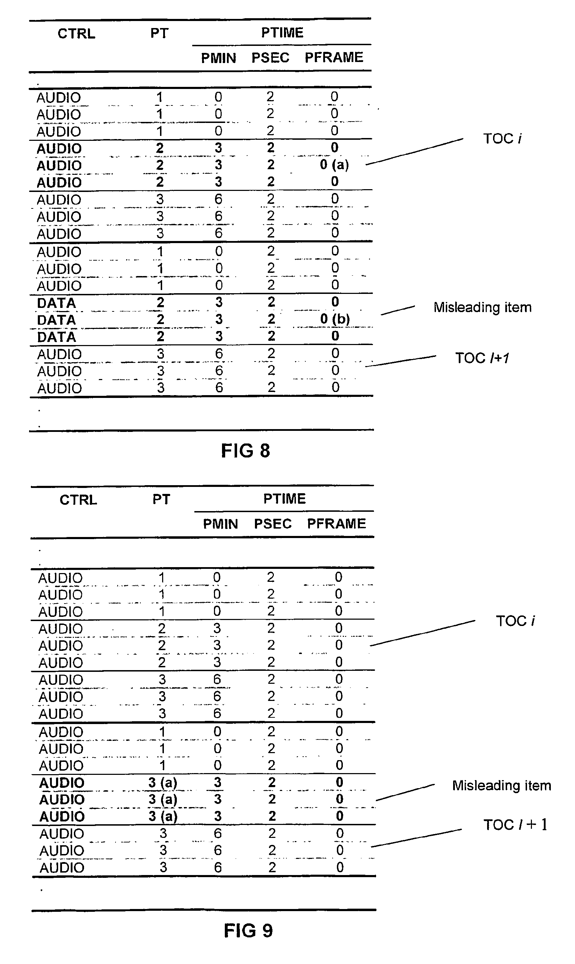

Reference is now made to Fig. 8 which illustrates an embodiment of the invention in which a portion of the lead-in (AUDIO triplet (marked A1 in Fig. 2 and "a" in Fig.8) is altered to a DATA triplet (marked "b" in Fig.8).

Fig. 9, to which reference is now made, illustrates a further embodiment of the invention in which the point (PT) of a triplet is amended to 3 (marked by the letter "a") instead of the correct value of 2 (A5 in Fig. 2).

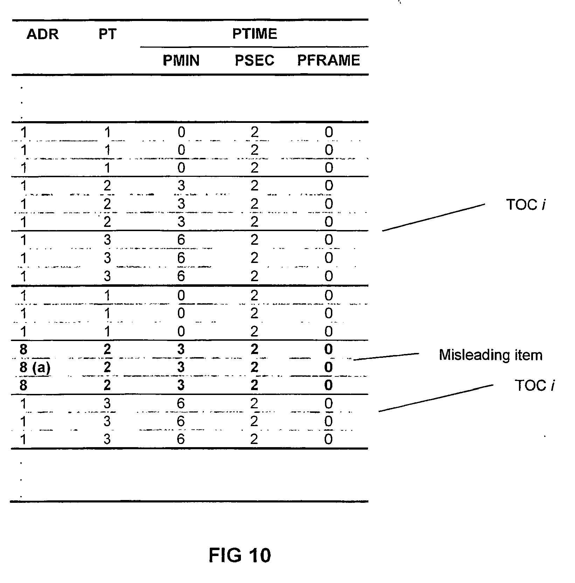

Reference is now made to Fig. 10, which illustrates a further embodiment of the invention in which polymorphic TOCs are created by setting the Mode (ADR) field of an item or an entire triplet to a value other than 1, 2, or 5. In the exemplary embodiment of Fig. 10, the ADR of a triplet (marked "a") is set to 8 instead of the correct value of 1.

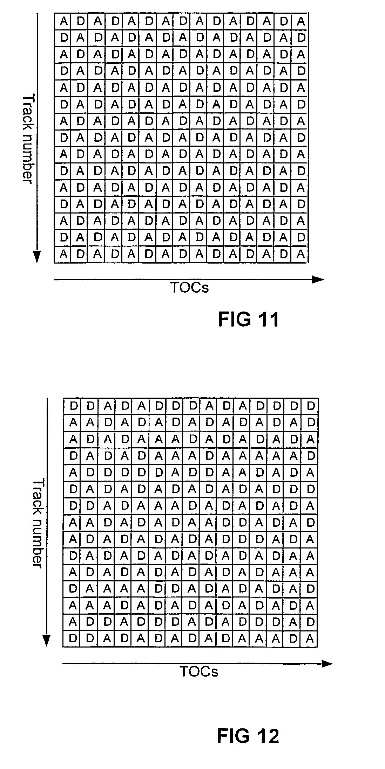

In a yet further example of an embodiment of the invention, polymorphic TOCs are produced by creating a "checkerboard" pattern of misleading and valid items. Reference is now made to Figs. 11-13. Fig. 11 is an exemplary illustration of a "regular" checkerboard composed of alternating valid AUDIO and misleading DATA items.

In the example of Fig. 11, a disc with 15 audio tracks is protected by marking alternate tracks as DATA (setting the data bit in the ADR/Ctrl byte), instead of AUDIO, thereby creating misleading items. It will be appreciated by persons knowledgeable in the art that any other technique of creating misleading items may be used in place of setting the data bit.

Fig. 12 is an exemplary illustration of a randomized checkerboard of polymorphic TOCs. In the example of Fig. 12, a "regular" checkerboard is first created (similar to Fig. 11) and then the checkerboard is randomized. Each track is represented by at least one A (AUDIO) and one D (DATA) item.

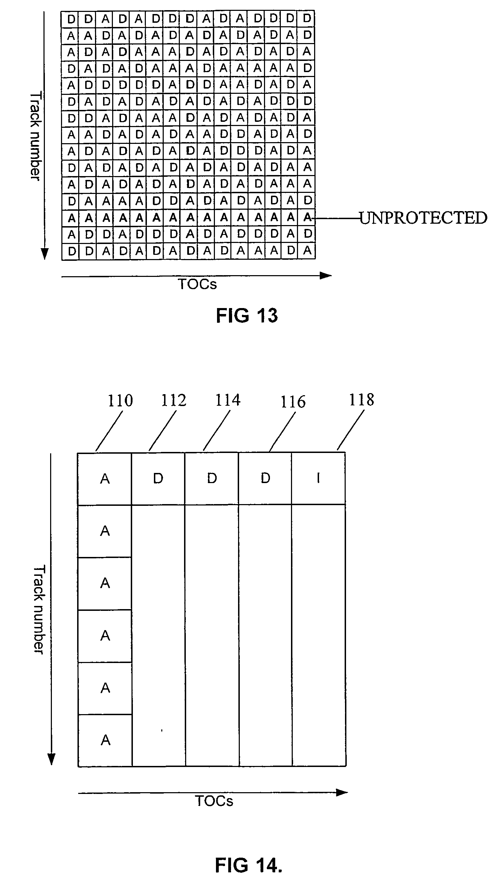

Reference is now made to Fig. 13, which illustrates a further embodiment of the invention using polymorphic TOCs, in which a partial checkerboard is created. In this case, a "regular" and/or a randomized checkerboard is created with the additional modification of containing at least one unprotected row (a row of AUDIO items shown bolded in Fig. 13).

Reference is now made to Fig. 14, which illustrates a further embodiment of the invention utilizing polymorphic TOCs. In the example of Fig. 14, a valid TOC is created at an offset of the lead-in (column 110). A number of misleading TOCs are added (columns 112, 114, 116) containing only one data track. Finally, the sequence is terminated with a single invalid triplet (column 118).

It will be appreciated by persons knowledgeable in the art that alterations may be also be made to an individual triplet (as described hereinabove with reference to Fig's 6 and 7 for example) as well as alterations to a TOC, either independently or any combination with polymorphic triplets and TOCs.

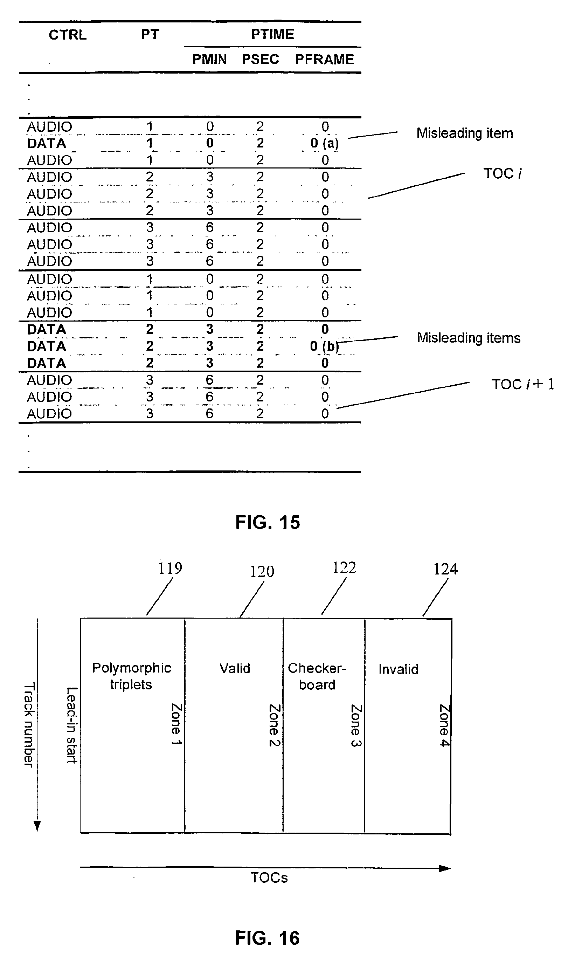

Reference is now made to Fig. 15, which illustrates a further embodiment of the invention in which a lead-in is altered so as to comprise a combination of polymorphic triplets and polymorphic TOCs. The example of Fig. 15 illustrates a polymorphic triplet (marked by the letter "a") in which the AUDIO item has been amended to a DATA item and the polymorphic TOC (marked by the letter "b"), in which the AUDIO triplet has been amended to a DATA triplet.

Reference is now made to Fig. 16, which illustrates a further embodiment of the invention in which both polymorphic triplets and polymorphic TOCs are applied to the same lead-in (known as a "composite" disc). Such a lead-in contains zones, with a zone being a series of consecutive TOCs sharing a common alteration algorithm.

In the example of Fig.16, the first zone 120 comprises triplets, which are all polymorphic. The second zone 122 comprises valid uniform TOCs, while the third zone comprises a checkerboard 123 (similar to the checkerboard embodiments described hereinabove with reference to Fig. 12 and 13). In the fourth zone, all of the items are DATA as described hereinabove with reference to Fig. 14. As will be appreciated by persons knowledgeable in the art, the examples are non-limiting and may be applied to any session of a "composite" disc.

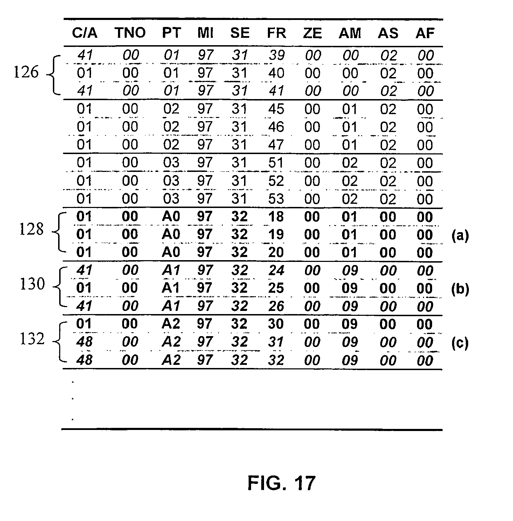

Reference is now made to Fig. 17 which illustrates a further embodiment of the invention in which the A0-A2 items in polymorphic TOCs may be changed. The Control field (C/A) may be amended so that triplet 126 is non-uniform, that is part of the C/A of triplet 126 is amended to 41 h (instead of 01 h -see triplet 50 of Fig. 3).

In one embodiment, the A0-A2 items of a triplet 128 (marked "a") may be left unaltered, regardless of processing of triplet 126.

The example of Fig. 17 further illustrates two alternative ways of altering the A0-A2 items. In triplet 130 (marked "b"), the A0-A2 items may be invalidated (to "41") in the same ways as the surrounding track pointers of triplet 126. In triplet 132, the A0-A2 items may be invalidated in a way that is different from the surrounding track pointers so that part of the C/A is altered to give a misleading (and invalid) reading of "48".

As illustrated, modifications may occur in any of the three items of a triplet.

While this example demonstrates polymorphic triplets with A0-A2 items, it will be appreciated by persons knowledgeable in the art that A0-A2 items may also be applied to polymorphic TOCs.

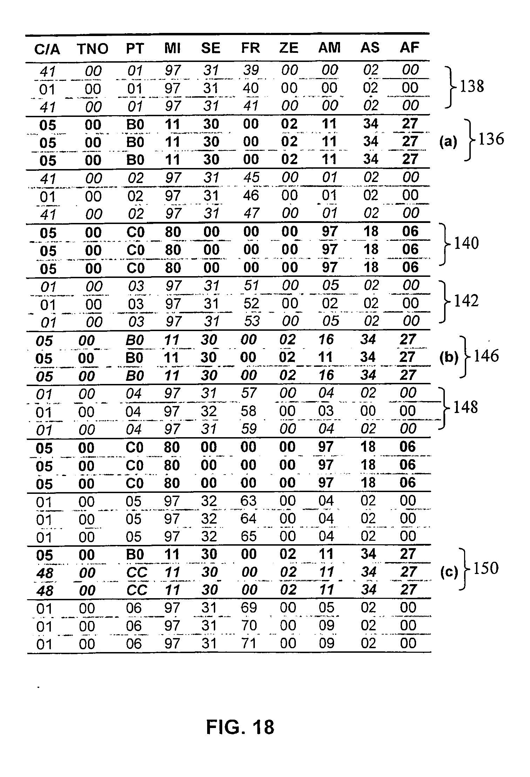

Reference is now made to Fig. 18, which illustrates a further embodiment of the invention in which the multi-session pointers of a Polymorphic TOC may be altered. As described hereinabove with reference to Fig. 4, a multi-session disc has a set of multi-session pointers 62 that are interleaved between the standard track pointers 60 and allow navigation between sessions in a linked list.

In one embodiment, the multi-session pointers 136 (marked "a") (equivalent to multi-session pointers 62 in Fig. 4) may be left unaltered, regardless of processing of triplets 138, 140. The C/A values of two of the triplets 138, 140 have been altered to "41" instead of "01" in multi-session pointers 60 of Fig. 4. Similarly, multi-session pointers 142 (equivalent to multi-session pointers 64 in Fig. 4) is unaltered.

The example of Fig. 18 further illustrates two alternative ways of altering the multi-session pointers. In triplet 144 (marked "b"), the multi-session pointers may be invalidated in the same ways as the surrounding track pointers of triplets 146, 148. In triplet 150, the multi-session pointers be invalidated in a way that is different from the surrounding track pointers so that part of the C/A triplet is altered to give a misleading (and invalid) reading of "48". Modifications may occur in any of the three items in a triplet.

While this example demonstrates polymorphic multi-session triplets, it will be appreciated by persons knowledgeable in the art that polymorphic TOCs may also be similarly amended.

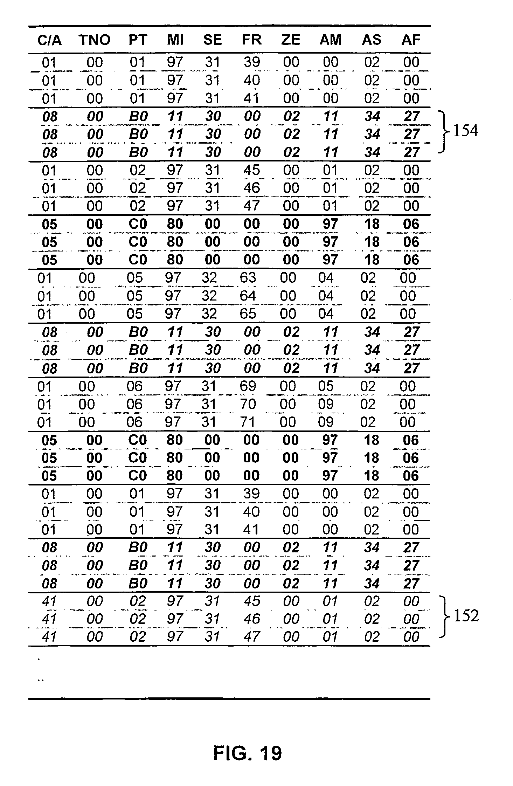

Reference is now made to Fig. 19 which is an exemplary illustration of an embodiment of the present invention in which polymorphic TOCs include both a polymorphic TOC and multi-session pointers that are all invalidated. In the example of Fig. 19, all alterations are italicized and the multi-session pointers are bolded. The second audio track 152 has a misleading Ctrl in the second TOC shown (Ctrl = 4, indicating DATA, rather than AUDIO) and all the B0 multi-session pointers 154 have an invalid ADR (ADR = 8).

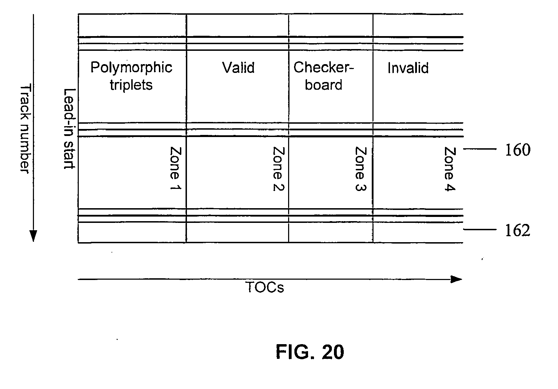

This type of modification can be made to polymorphic TOCs that have polymorphic triplets in which the multi-session pointers all point to an incorrect location in the Program Area. Reference is now made to Fig. 20 which is an exemplary illustration of an embodiment of the present invention in which a composite disc, (described hereinabove with reference to Fig. 16), may also include multi-session pointers invalidated in a polymorphic manner. For example, in Fig. 20, the bold lines 160, 162 indicate the invalidated multi-session pointers.

It will be appreciated that in a composite disc, different multi-session effects may be applied to each zone. Furthermore, certain zones may eliminate multi-session pointers altogether, effectively "hiding" the second session. In a disc with more than two sessions, a middle session may be hidden in certain device classes by restricting or modifying the multi-session pointers or eliminating them on a zone-by-zone basis.

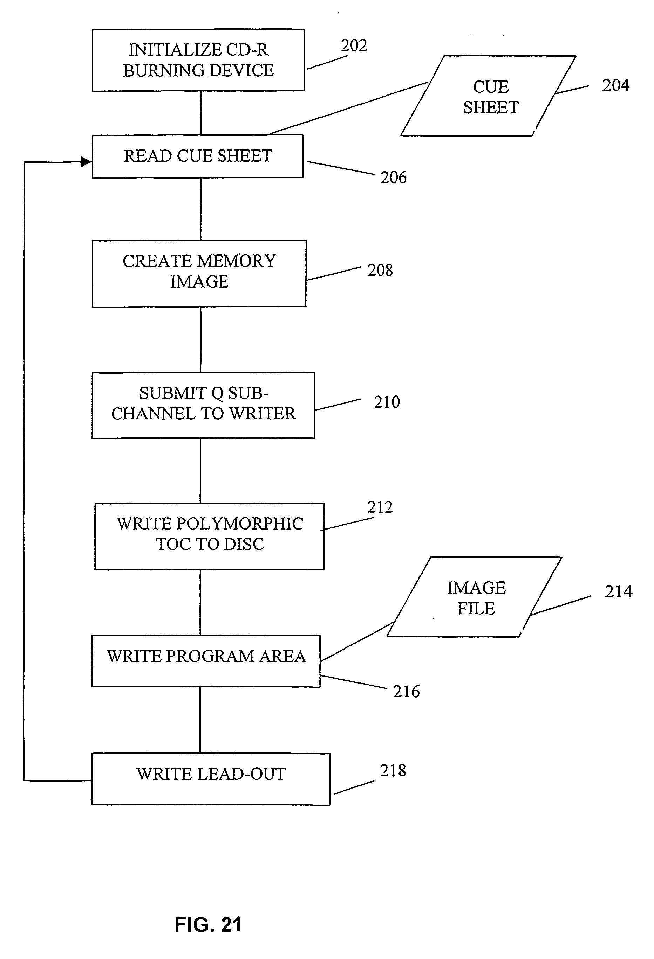

Reference is now made to Fig. 21, which is a flow-chart illustration of a method of generating a Polymorphic TOC disc.

The CD-R writer determines that a blank CD-R is in place in the drive and is initialized in Raw DAO mode (step 202). The cue sheet (204) is read (step 206) and a memory image of the lead-in to be produced is created (step 208). The cue sheet describes the layout of the disc in terms of tracks. At a minimum, the cue sheet may provide the absolute time offset in frames for each track and the total number of tracks.

The lead-in is formed in the channel Q of successive frames and submitted (step 210) in blocks of frames to the writer. For each frame, an algorithm, which generates the form of polymorphism applicable to that frame, may be applied. The correct Q channel is placed into the raw stream that is submitted to the writer (step 212).

After the lead-in is written, the Program Area is written (step 216) using the image file (214). The image file may be a 44.1 K sample per second stereo (16 bits per sample) PCM file containing the main channel of the disc as a waveform, or a raw 2352-byte per sector ISO file for a data disc. The subchannel is calculated normally for each frame according to the algorithms in IEC 908. The lead-out is then written (step 218).

In a multi-session disc, steps 206- 218 repeated for each session.

It may be useful to create a valid audio TOC, for example, for use in a first session. One method of creating a valid audio TOC may read the TOC sequentially, only the basic parameters from the TOC are determined. The basic parameters must be valid regardless of polymorphism, and thus a true TOC may be recreated by reading the Program Area entries pointed to by any valid triplets.

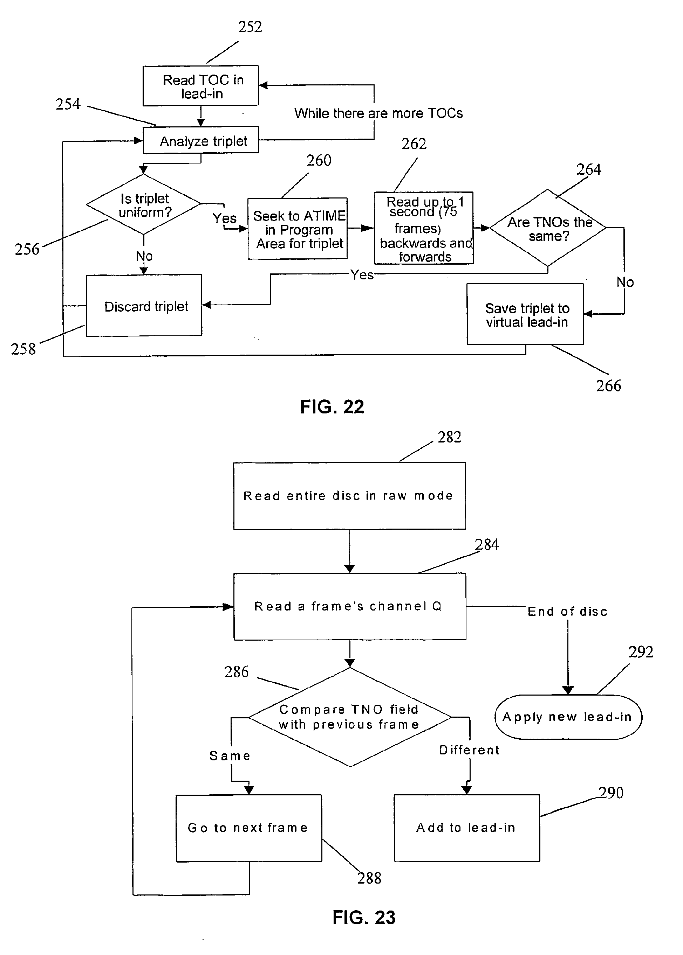

Figure 22, to which reference is now made, is a flow-chart illustration of a method for creating a true lead-in. The TOC is read (step 252) and for each triplet in the instance of the TOC, the triplet is analyzed (step 254). If the triplet is not uniform (query box 256), it is discarded (step 258).

If the triplet is uniform, the ATime pointed to by the triplet is sought and the Q channel at the Atime in the Program Area is read (step 260). An analysis (step 262) of the frames (both backwards and forwards of the Atime) is then made. For example, since one second of time is equivalent to 75 frames, by analyzing one second either side of the Atime, it should be possible to locate a frame with the same track number as the triplet within one second of the Atime. However, an analysis may be made for a longer period.

Thus, for example if the track number (TNO) (of the next backward frame) is not one less than the track number (TNO) of the following frame (query box 264), the triplet is discarded (step 258). If the ADR/Ctrl field of the triplet has the data bit set but the frame does not have the corresponding data bit set, the bit is reset to audio. If the track number (TNO) is correct, the triplet is saved into a memory reconstruction of the TOC (step 266).

If an instance is incomplete (for example, if the A0-A2 items indicate more tracks or a longer disc than the reconstructed TOC), steps 254-266 are repeated for the next instance of the TOC.

Once a complete and valid TOC has been reconstructed, the disc may be read according to the reconstructed valid TOC.

In an alternative embodiment, the entire Program Area may be read in 2448-byte raw mode, thereby preserving the main channel and subchannel. Following the entire read, the channel Q may be analyzed using the algorithm illustrated in Fig. 23 to which reference is now made.

The entire disc is read in raw mode (step 282) and the channel Q of the frame is read (step 284). The track number (TNO) of the frame is compared with track number (TNO) of the previous frame (query box 286). If the track number (TNO) is the same as the previous track number (TNO), the next frame is then read (steps 288) and steps 284-286 are repeated. If the track number (TNO) is greater than the previous frame, a TOC entry with the new track number and the ATime of the current frame is created I(step 290).

Steps 284-290 are then repeated until the end of the disc (step 292). Each track may then be interpreted from its image in the correct mode.

This document describes examples applying polymorphic lead-ins to the audio portion of an audio or multi-session audio-data disc; however, all such examples are non-limiting.

While the invention has been described with respect to a limited number of embodiments, it will be appreciated that many variations, modifications and other applications of the invention may be made.

## Claims

1. A compact disc having at least one session, said at least one session comprising a lead-in having a plurality of subcoding blocks, each of said plurality of subcoding blocks comprising an item in channel Q, said item comprising at least a Point (PT), Adr/Ctrl, Pmin, Psec and Pframe,
wherein the Point of at least one of said plurality of subcoding blocks is identical to the Point in at least one other of said plurality of subcoding blocks; and
wherein the value of at least one of a group including Adr/Ctrl, Pmin, Psec and Pframe in said at least one of said plurality of subcoding blocks differs from the value of at least one of the corresponding group of Adr/Ctrl, Pmin, Psec and Pframe in said at least one other of said plurality of subcoding blocks.

2. The compact disc according to claim 1, wherein said plurality of subcoding blocks comprises:
- a repetition of items, wherein at least one of the group including Adr/Ctrl, Pmin, Psec and Pframe of at least one of said repetition of items is altered; and/or
- a continuous repetition of table of contents (TOCs), wherein at least one item in at least one of the group including Adr/Ctrl, Pmin, Psec and Pframe of one of said repetition of table of contents (TOCs) has a different value from the corresponding item in at least one other of said repetition of table of contents (TOCs); and/or
- a combination of a repetition of items, and continuous repetition of table of contents (TOCs),
wherein at least one of the group including Adr/Ctrl, Pmin, Psec and Pframe of at least one of said repetition of items is altered, and wherein at least one item in at least one of the group including Adr/Ctrl, Pmin, Psec and Pframe of one of said repetition of table of contents (TOCs) has a different value from the corresponding item in at least one other of said repetition of table of contents (TOCs), and/or
wherein a plurality of zones, wherein an alteration algorithm is applied to each of said plurality of zones.

3. The compact disc according to claim 2, wherein
at least one of the values in the control data of said one of said repetition of items is replaced by a misleading or invalid value.

4. The compact disc according to claim 3, wherein
said misleading or invalid value comprises an indication that an audio portion of the disc contains data or vice versa.

5. The compact disc according to claim 3 or 4, wherein
said misleading or invalid value is a triplet which comprises an indication that the starting time of the track is invalid or misleading

6. The compact disc according to one of the claim 2 to 5, wherein
at least one of the values of the Cyclic Redundancy Check (CRC) of said one of said repetition of items is replaced by a misleading or invalid value.

7. The compact disc according to one of the claim 2 to 6, wherein
said one of said repetition of table of contents (TOCs) comprises a misleading or invalid triplet.

8. The compact disc according to claim 6, wherein
said misleading or invalid triplet comprises:
- an indication than an audio portion of the disc contains data or vice versa, and/or
- an indication that the starting time of the track is invalid or misleading, and/or
- a misleading or invalid point, and/or
- setting the Adr/Ctrl field to an invalid value.

9. The compact disc according to one of the claim 2 to 8, wherein
said one of said repetition of table of contents (TOCs) comprises:
- an interleaved pattern of alternating valid and invalid triplets, and/or
- one of a group including at least one misleading or invalid triplet.

10. The compact disc according to claim 9, wherein
said alternating valid and invalid triplets are represented by audio and data item respectively, or vice versa, and/or wherein said pattern is randomized.

11. The compact disc according to claim 10,
wherein each track is represented by at least one audio and one data item, and/or
wherein one of the points of said one of said repetition of table of contents (TOCs) remain uniform.

12. The compact disc according to one of the claims 2 to 11, wherein
said plurality of zones comprise any combination of a group including a valid table of contents (TOCs), an invalid table of contents (TOCs), an interleaved pattern of alternating valid and invalid entries and one of a group including at least one data track or at least one invalid triplet, and
wherein said invalid table of contents (TOCs) comprises one repetition of the table of contents (TOCs), which is different from at least one other of repetition of the table of contents (TOCs).

13. The compact disc according to one of the claims 2 to 12, wherein
the A0, A1, and A2 points have invalid or misleading values.

14. The compact disc according to either of claims 1 and 2, further comprising a multi-session disc having a plurality of multi-session pointers, wherein at least one of said plurality of multi-session pointers is invalid or misleading.

15. The compact disc according to one of the preceding claims, wherein
said compact disc comprises one of a group including a compact disc (CD), a recordable compact disc (CD-R), and a CD-Rewritable compact disc (CD-RW).

16. A method for protecting a compact disc from unauthorized copying, said method comprising the steps of:
- generating a lead-in, said lead-in comprising a lead-in having a plurality of subcoding blocks, each of said plurality of subcoding blocks comprising an item in channel Q, said item comprising at least a Point (PT), Adr/Ctrl, Pmin, Psec and Pframe, wherein the Point of at least one of said plurality of subcoding blocks is identical to the Point in at least one other of said plurality of subcoding blocks; and
- altering the value of at least one of a group including Adr/Ctrl, Pmin, Psec and Pframe in said at least one of said plurality of subcoding blocks to a value different from at least one of the corresponding group of Adr/Ctrl, Pmin, Psec and Pframe in said at least one other of said plurality of subcoding blocks.

## Patentansprüche

1. Compact Disc mit mindestens einer Session, wobei die mindestens eine Session einen Lead-in-Bereich (Einlaufbereich) mit einer Mehrzahl Subcodierungs-Blöcken aufweist, wobei jeder der Mehrzahl Subcodierungs-Blöcke ein Item im Kanal Q aufweist, das mindestens einen Point (PT), Adr/Ctrl, Pmin, Psec und Pframe aufweist, bei der der Point des mindestens einen der Mehrzahl Subcodierungs-Blöcke identisch ist mit dem Point in mindestens einem anderen der Mehrzahl Subcodierungs-Blöcke; und
bei der der Wert mindestens eines einer Gruppe, die Adr/Ctrl, Pmin, Psec und Pframe in dem mindestens einen der Mehrzahl Subcodierungs-Blöcke enthält verschieden ist vom Wert mindestens eines der entsprechenden Gruppe aus Adr/Ctrl, Pmin, Psec und Pframe in dem mindestens einen anderen der Mehrzahl Subcodierungs-Blöcke.

2. Compact Disc nach Anspruch 1, bei der die Mehrzahl Subcodierungs-Blöcke aufweist:
- eine Wiederholung der Items, wobei mindestens eines der Gruppe, die Adr/Ctrl, Pmin, Psec und Pframe enthält, von mindestens einer der Wiederholungen der Items geändert wird; und/oder
- eine kontinuierliche Wiederholung der Inhaltsverzeichnisse (tables of contents (TOCs)), wobei mindestens ein Item einer Gruppe, die Adr/Ctrl, Pmin, Psec und Pframe enthält, der einen Wiederholung der Inhaltsverzeichnisse (TOCs) einen Wert hat, der verschieden vom entsprechenden Item in mindestens in einer anderen Wiederholung der Inhaltsverzeichnisse (TOCs) ist; und/oder
- eine Kombination einer Wiederholung von Items und der kontinuierlichen Wiederholung der Inhaltsverzeichnisse (TOCs),
wobei mindestens eines der Gruppe aus Adr/Ctrl, Pmin, Psec und Pframe der mindestens einen Wiederholung der Items geändert wird, und wobei mindestens ein Item in mindestens einer der Gruppe, die Adr/Ctrl, Pmin, Psec und Pframe, von einer der Wiederholungen der Inhaltsverzeichnisse (TOCs) enthält, einen Wert hat, der verschieden ist vom entsprechenden Item in mindestens einer anderen Wiederholung der Inhaltsverzeichnisse (TOCs), und/oder
bei der eine Mehrzahl Zonen vorgesehen ist, wobei ein Änderungsalgorithmus auf jede der Mehrzahl Zonen angewendet wird.

3. Compact Disc nach Anspruch 2, bei der
mindestens einer der Werte in den Steuerdaten der einen Wiederholung der Items durch einen falschen oder ungültigen Wert ersetzt ist.

4. Compact Disc nach Anspruch 3, bei der
der falsche oder ungültige Wert eine Angabe enthält, dass ein Audioabschnitt der Disc Daten enthält oder umgekehrt.

5. Compact Disc nach Anspruch 3 oder 4, bei der
der falsche oder ungültige Wert ein Tripel ist, das eine Angabe aufweist, dass die Startzeit der Spur ungültig oder falsch ist.

6. Compact Disc nach einem der Ansprüche 2 bis 5, bei der
mindestens einer der Werte der zyklischen Redundanzkontrolle (Cyclic Redundancy Check (CRC)) der einen Wiederholung der Items durch einen falschen oder ungültigen Wert ersetzt ist.

7. Compact Disc nach einem der Ansprüche 2 bis 6, bei der
die eine der Wiederholungen der Inhaltsverzeichnisse (TOCs) ein falsches oder ungültiges Tripel aufweist.

8. Compact Disc nach Anspruch 6, bei der
das falsche oder ungültige Tripel aufweist:
- eine Angabe, dass ein Audioabschnitt der Disc Daten enthält, oder umgekehrt, und/oder
- eine Angabe, dass die Startzeit der Spur ungültig oder falsch ist , und/oder
- ein falscher oder ungültiger Point, und/oder
- Setzen des Adr/Crtl-Feldes auf einen ungültigen Wert.

9. Compact Disc nach einem der Ansprüche 2 bis 8, bei der
die eine der Wiederholungen der Inhaltsverzeichnisse (TOCs) aufweist:
- ein durcheinander gewürfeltes Muster abwechselnd gültiger und ungültiger Tripel, und/oder
- eines aus einer Gruppe, die mindestens ein falsches oder ungültiges Tripel enthält.

10. Compact Disc nach Anspruch 9, bei der
die abwechselnden gültigen und ungültigen Tripel durch Audio- bzw. Daten-Items repräsentiert sind, oder umgekehrt, und/oder bei der das Muster verwürfelt ist.

11. Compact Disc nach Anspruch 10,
bei der jede Spur durch mindestens ein Audio- und ein Daten-Item repräsentiert ist, und/oder bei der einer der Points der einen Wiederholung der Inhaltsverzeichnisse (TOCs) gleich bleibt.

12. Compact Disc nach einem der Ansprüche 2 bis 11, bei der
die Mehrzahl Zonen eine beliebige Kombination aus einer Gruppe, die ein gültiges Inhaltsverzeichnis (TOC), ein ungültiges Inhaltsverzeichnis (TOC), ein durcheinander gewürfeltes Muster abwechselnd gültiger und ungültiger Einträge und eine Gruppe, die mindestens eine Datenspur oder mindestens ein ungültiges Tripel enthält, aufweist, und
bei der das ungültige Inhaltsverzeichnis (TOC) eine Wiederholung des Inhaltsverzeichnisses (TOC), die verschieden ist von mindestens einer anderen Wiederholung des Inhaltsverzeichnisses (TOC).

13. Compact Disc nach einem der Ansprüche 2 bis 12, bei der
die Points A0, A1 und A2 ungültige oder falsche Werte haben.

14. Compact Disc nach einem der Ansprüche 1 oder 2, die ferner eine Multi-Session-Disc mit einer Mehrzahl Multi-Session-Pointer aufweist, wobei mindestens einer der Multi-Session-Pointer ungültig oder falsch ist.

15. Compact Disc nach einem der vorigen Ansprüche, bei der
die Compact Disc eine Gruppe einschließlich einer Compact Disc (CD), einer beschreibbaren Compact Disc (CD-R) und einer wiederbeschreibbaren Compact Disc (CD-RW) aufweist.

16. Verfahren zum Schutz einer Compact Disc gegen unbefugtes Kopieren, wobei das Verfahren die Schritte aufweist:
- Erzeugen eines Lead-in, der eine Mehrzahl Subcodierungs-Blöcke hat, wobei jeder der Mehrzahl Subcodierungs-Blöcke ein Item im Kanal Q aufweist, das mindestens einen Point (PT), Adr/Ctrl, Pmin, Psec und Pframe aufweist, wobei der Point des mindestens einen der Mehrzahl Subcodierungs-Blöcke identisch ist mit dem Point in mindestens einem anderen der Mehrzahl Subcodierungs-Blöcke; und
- Ändern des Wertes mindestens eines einer Gruppe, die Adr/Ctrl, Pmin, Psec und Pframe enthält, in dem mindestens einen der Mehrzahl Subode-Blöcke auf einen Wert, der verschieden ist von mindestens einem Wert eines der entsprechenden Gruppe aus Adr/Ctrl, Pmin, Psec und Pframe in dem mindestens einen anderen der Mehrzahl Subcodierungs-Blöcke.

## Revendications

1. Disque compact ayant au moins une session, ladite au moins une session comprenant une zone d'entrée ayant une pluralité de blocs de sous-codage, chacun de ladite pluralité de blocs de sous-codage comprenant un article dans un canal Q, ledit article comprenant au moins un point (PT), Adr/Ctrl, Pmin, Psec et Pframe,
dans lequel le point d'au moins un de ladite pluralité de blocs de sous-codage est identique au point dans au moins un autre de ladite pluralité de blocs de sous-codage, et
dans lequel la valeur d'au moins un d'un groupe comprenant Adr/Ctrl, Pmin, Psec et Pframe dans ledit au moins un de ladite pluralité de blocs de sous-codage diffère de la valeur d'au moins un du groupe correspondant de Adr/Ctrl, Pmin, Psec et Pframe dans ledit au moins un autre de ladite pluralité de blocs de sous-codage.

2. Disque compact selon la revendication 1, dans lequel ladite pluralité de blocs de sous-codage comprend :
- une répétition d'articles, dans lequel au moins un du groupe comprenant Adr/Ctrl, Pmin, Psec et Pframe d'au moins un de ladite répétition d'articles est altéré et/ou
- une répétition continue de tables des matières (TOC), au moins un article dans au moins un du groupe comprenant Adr/Ctrl, Pmin, Psec et Pframe d'une ladite répétition de tables des matières (TOC) a une valeur différente de l'article correspondant dans au moins une autre de ladite répétition de tables des matières (TOC), et/ou
- une combinaison d'une répétition d'articles, et une répétition continue de tables des matières (TOC),
dans lequel au moins un du groupe comprenant Adr/Ctrl, Pmin, Psec et Pframe d'au moins un de ladite répétition d'articles est altéré, et dans lequel au moins un article dans au moins un du groupe comprenant Adr/Ctrl, Pmin, Psec et Pframe d'une de ladite répétition de tables des matières (TOC) a une valeur différente de l'article correspondant dans au moins une autre de ladite répétition de tables des matières (TOC), et/ou dans lequel se trouvent une pluralité de zones, dans lequel un algorithme d'altération est appliqué à chacune de ladite pluralité de zones.

3. Disque compact selon la revendication 2, dans lequel
au moins une des valeurs dans les données de commande dudit au moins un de la répétition d'articles est remplacée par une valeur trompeuse ou invalide.

4. Disque compact selon la revendication 3, dans lequel
ladite valeur trompeuse ou invalide comprend une indication qu'une partie audio du disque contient des données ou vice versa.

5. Disque compact selon la revendication 3 ou 4, dans lequel
ladite valeur trompeuse ou invalide est un triplet qui comprend une indication que le temps de démarrage de la piste est invalide ou trompeur.

6. Disque compact selon l'une quelconque des revendications 2 à 5, dans lequel
au moins une des valeurs du contrôle par redondance cyclique (CRC) dudit un de ladite répétition d'articles est remplacée par une valeur trompeuse ou invalide.

7. Disque compact selon l'une quelconque des revendications 2 à 6, dans lequel
ladite une de ladite répétition de tables des matières (TOC) comprend un triplet trompeur ou invalide.

8. Disque compact selon la revendication 6, dans lequel
ledit triplet trompeur ou invalide comprend :
- une indication qu'une partie audio du disque concerne des données ou vice et versa, et/ou
- une indication que le temps de démarrage de la piste est invalide ou trompeur, et/ou
- un point trompeur ou invalide, et/ou
- l'établissement du champ Adr/Ctrl à une valeur invalide.

9. Disque compact selon l'une quelconque des revendications 2 à 8, dans lequel
ladite une de ladite répétition de tables des matières (TOC) comprend :
- un motif entremêlé de triplets valides et invalides alternés, et/ou
- un parmi un groupe comprenant au moins un triplet trompeur ou invalide.

10. Disque compact selon la revendication 9, dans lequel
lesdits triplets valides et invalides alternés sont représentés par un article audio et de données respectivement, ou vice versa, et/ou dans lequel ledit motif est réparti de manière aléatoire.

11. Disque compact selon la revendication 10,
dans lequel chaque piste est représentée par au moins un article audio et un article de données et/ou dans lequel un des points de ladite une de ladite répétition de tables des matières (TOC) reste uniforme.

12. Disque compact selon l'une quelconque des revendications 2 à 11, dans lequel
ladite pluralité de zones comprend une quelconque combinaison d'un groupe comprenant une table des matières valide (TOC), une table des matières invalide (TOC), un motif entremêlé d'entrées valides et invalides alternées et un d'un groupe comprenant au moins une piste de données ou au moins un triplet invalide, et
dans lequel lesdites tables des matières invalides (TOC) comprennent une répétition de tables des matières (TOC) qui est différente d'au moins une autre de la répétition de tables des matières (TOC).

13. Disque compact selon l'une quelconque des revendications 2 à 12, dans lequel
les points A0, A01 et A2 ont des valeurs invalides ou trompeuses.

14. Disque compact selon la revendication 1 ou 2, comprenant en outre un disque à multiples sessions ayant une pluralité de pointeurs à multiples sessions, dans lequel au moins un de ladite pluralité de pointeurs à multiples sessions est invalide ou trompeur.

15. Disque compact selon l'une quelconque des revendications précédentes, dans lequel
ledit disque compact comprend un parmi un groupe comprenant un disque compact (CD), un disque compact inscriptible (CD-R), et un disque compact réinscriptible CD (CD-RW).

16. Procédé de protection d'un disque compact vis-à-vis d'une reproduction non autorisée, ledit procédé comprenant les étapes consistant à :
- générer une zone d'entrée, ladite zone d'entrée comprenant une zone d'entrée ayant une pluralité de blocs de sous-codage, chacun de ladite pluralité de blocs de sous-codage comprenant un article dans un canal Q, ledit article comprenant au moins un point (PT), Adr/Ctrl, Pmin, Psec et Pframe, dans lequel le point d'au moins un de ladite pluralité de blocs de sous-codage est identique au point dans au moins un autre de ladite pluralité de blocs de sous-codage, et
- altérer la valeur d'au moins un d'un groupe comprenant Adr/Ctrl, Pmin, Psec et Pframe, dans au moins un de ladite pluralité de blocs de sous-codage a une valeur différente d'au moins un du groupe correspondant de Adr/Ctrl, Pmin, Psec et Pframe dans ledit au moins un autre de ladite pluralité de blocs de sous-codage.
